(19) Europäisches Patentamt / European Patent Office / Office européen des brevets

(11) **EP 3 650 846 A1**

(12) **EUROPEAN PATENT APPLICATION**

(43) Date of publication:
**13.05.2020 Bulletin 2020/20**

(51) Int Cl.:
*G01N 27/02* (2006.01)   *F03D 80/40* (2016.01)

(21) Application number: **18205800.8**

(22) Date of filing: **12.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Zensor NV**
  **1040 Brussel (BE)**
• **Nitto Belgium NV**
  **3600 Genk (BE)**

(72) Inventors:
• **VAN INGELGEM, Yves**
  **3404 Landen (BE)**
• **PEETERS, Bart**
  **3590 Diepenbeek (BE)**
• **BIEGHS, Paul**
  **3600 Genk (BE)**

(74) Representative: **DenK iP**
  **Leuvensesteenweg 203**
  **3190 Boortmeerbeek (BE)**

(54) **SMART SENSING SYSTEM**

(57)     A sensing system (100) including a cover layer (101) for covering an underlying structure (120, 600) and at least a first electrode (103, 302, 322) and at least a second electrode (104, 303, 323) is described. The at least first and second electrodes (103, 104, 302, 303, 322, 323) are connectable to a signal source (613), for providing a signal coupling between the at least first and second electrodes (103, 104, 302, 303, 322, 323), the at least first and second electrodes (103, 104, 302, 303, 322, 323) being isolated from each other. The at least first and second electrodes (103, 104, 302, 303, 322, 323) and the cover layer (101) are configured so that the signal is at least partially transmitted through the cover layer (101), wherein the cover layer (101) has an impedance, so that a change of the signal coupling between the at least first and at least second electrodes (103, 104, 302, 303, 322, 323) can be detected upon changes of impedance of the cover layer (101).

FIG 1

EP 3 650 846 A1

## Description

## Field of the invention

The invention relates to the field of sensing. More specifically it relates to systems and sensors for sensing material characteristics, e.g. for detecting erosion in engineering and transport structures.

## Background of the invention

Mechanical structures such as turbines, ship hulls, beams, etc. are in contact with a surrounding environment which usually causes one or more types of mechanism that lead to failure of the structure, for example deformation or even rupture. Examples of these mechanisms include abrasion, due to for example impacts with small particles of the environment with the structure, or erosion due to a combination of several mechanisms, with the same end result of material loss, causing damage to the structure. Microdamages may also occur, for example due to pitting caused by chemical reaction of the surface of the structure with for example water droplets, and impacts thereof, leading to the formation of microscopic pores which may extend.

These damages can be reduced by including a protective layer on the area to be protected, thus isolating the area from the environment which causes the damage. However, the protective layer at some point becomes also damaged due to exposure to the environment, and stops offering protection. In order to keep the underlying structure itself undamaged, the protective layer needs to be exchanged at a certain moment in time, before the damage can reach the main structure. The protective layer thus needs to be replaced at a certain moment in time, but if the replacement is too early, then material is being wasted, and if it is too late, the damage in the structure may be extensive and reparations may be required.

The structure or its protective layer may include elements such as visual indications or sensors alerting that a replacement is required. However, these indications and alerts may appear too late, and the presence of these elements may affect the effectivity of the structure as well as their structural integrity.

## Summary of the invention

It is an object of the present invention to overcome one or more of the drawbacks identified above in relation with the prior art.

It is an advantage of embodiments of the present invention to provide a system and sensor with good sensing capabilities.

Particular and preferred aspects of the invention are set out in the accompanying independent and dependent claims. Features from the dependent claims may be combined with features of the independent claims and with features of other dependent claims as appropriate and not merely as explicitly set out in the claims.

It is an advantage of at least some embodiments of the present invention that systems and sensors are provided that combine protection against damage stemming from erosion, abrasion, etc. and sensing capabilities which allow monitoring the damage on a protective layer, thus allowing to avoid that damage extends to the underlying structure. On the other hand, methods and systems also allow that an exchange of the protective layer is carried out prior to such an exchange being actually required. It is an advantage of embodiments according to the present invention that it provides a good balance between providing protection and cost-control (by avoiding unnecessary replacement).

In one aspect, the present invention relates to a sensing system , the sensing system including a cover layer for covering an underlying structure,
at least a first electrode and at least a second electrode, the at least first and second electrodes being connectable to a signal source, for providing a signal coupling between the at least first and second electrodes, the at least first and second electrodes being isolated from each other, wherein at least first and second electrodes and the cover layer are configured so that the signal is at least partially transmitted through the cover layer,
wherein the cover layer has an impedance,
so that a change of the signal coupling between the at least first and at least second electrodes can be detected upon changes of impedance of the cover layer.

It is an advantage of embodiments of the present invention that damage can be detected on the protective layer before reaching the underlying structure. It is a further advantage that damage detection can be done in-situ, without need of analyzing, photographing, filming, ... the surface of the structure, and while the structure is operational. It is a further advantage that the layered configuration may follow the profile of the underlying structure. This helps avoiding the degradation of aerodynamics of the underlying profile, because no irregularities, such as sensing elements sticking out of the structure surface, need to be introduced. The sensing system may be for sensing structural damage. The cover layer may be a protective layer for protecting an underlying structure from damage. The change of impedance may in some embodiments be caused by damage, such as for example in the form of corrosion, abrasion or erosion.

The electrodes may be configured such that the signal coupling comprises at least one or more of capacitive coupling, inductive coupling or resistive coupling. It is an advantage of embodiments of the present invention that the sensing does not require a large consumption of energy.

The electrodes may be interdigitated electrodes. It is an advantage of embodiments of the present invention that the sensitivity can be large and a wide sensitive surface can be provided on the underlying structure.

The cover layer may embed the electrodes in a single sheet of material. It is an advantage that a thin system can be provided by integrating the two layers in a single sheet, for example in a protective multilayer structure.

The cover layer may cover a sensitive layer embedding the electrodes. It is an advantage of embodiments of the present invention that the impedance signal is not confined within a single layer but travels through a larger volume of material, thus allowing to cover a larger volume of material.

The cover layer may be attachable to a sensitive layer embedding the electrodes. The cover layer may for example be attachable to a sensitive layer in such a way that it can be removed for example once damage has been detected in order to replace the cover layer, without replacing the sensitive layer and/or the electrode embedded in the underlying structure at the same time. The latter can in one example be implemented by selecting an adhesive between the cover layer and the sensitive layer and/or the underlying structure in a range such that removal is possible. The cover layer thus may be releasably attachable to the sensitive layer. It is an advantage of embodiments of the present invention that the protective layer can be interchanged and disposed, for example after heavy or extensive damage has been detected, while being able to re-use the second sheet including the sensitive part (layer) of the system. The electrodes may comprise conductive ink. It is an advantage of embodiments of the present invention that conductive tracks and electrodes can be easily provided directly by painting or printing the electrodes on the sensitive or protective layer.

At least part of the sensing system may be included in a multi-layer structure attachable to an underlying structure via an adhesive layer. The adhering to the underlying structure may for example be obtained by glue, adhesive, pressure sensitive adhesive, UV curable adhesive and the like. Examples of possible materials that may be used are acryl-based adhesives, rubber-based adhesives, silicone-based adhesives, urethane-based adhesives, olefin based adhesives, etc. The peel off force for releasing the lamination or protective film may be in the order of 1N/20mm to 50N/20mm, for example between 3N/20mm to 30N/20mm.

It is an advantage of embodiments of the present invention that the sensing element can be provided to an existing structure, and can be replaced if required with a new sensing element or parts thereof.

The electrodes may be configurable for being interlayered between at least a portion of the cover layer and an underlying structure.

At least part of the sensing system may be integrated in an underlying structure. It is an advantage of embodiments of the present invention that the sensing system can be tailored and optimized to an underlying structure.

The sensing system may include a signal source and readout unit for analyzing the signal. It is an advantage of embodiments of the present invention that a damage sensor for a structure can be provided, providing measurement of damage before it extends to the structure being measured.

The sensing system may further comprise an output for providing a signal, alert, or data corresponding to the results of the analysis. It is an advantage of embodiments of the present invention that a damage sensor for a structure can be monitored, additionally can raise an alert level if the detected damage surpasses a predetermined threshold.

The signal source and readout unit may be adapted for analyzing changes of conductivity of at least one of the plurality of electrodes, so that a change of the current through the electrodes can be detected upon total penetration of damage through the protective layer. It is an advantage of embodiments of the present invention that an indication of significant damage, such as full penetration of the protective layer, can be obtained.

The present invention also relates to the use of a sensor as described above for sensing damage of any of wind turbine blades, pipelines, risers, ship hulls, wave or tidal energy harvesters, offshore wind turbine foundations, or ship bulkheads, holds or tanks or for sensing icing or fouling. It is an advantage of embodiments of the present invention that the erosion, corrosion, abrasion and other type of damages can be detected in different structures. For example, the present system allows detecting and measuring leading edge erosion of wind turbine blades; erosion in oil pipelines or risers; erosion in dredging pipes; icing on wind turbine blades; fouling on a ship hull; fouling on a wave or tidal device such as energy harvesters; erosion in ship bulkheads, holds, tanks, etc. Detection thus may be based on reduction of the thickness of a certain layer or detection of an additional layer or a growth in layer thickness.

In one aspect, the present invention relates to a method for monitoring an underlying structure, the method comprising, detecting a level of erosion based on a thickness of a cover layer applied to an underlying structure, transmitting the sensed data to a processor for interpreting the sensor signal, deriving a diagnosis and/or prognosis of the impact of the level of erosion, and in view of said diagnosis and/or prognosis, replacing the cover layer before damage has occurred to the underlying structure.

It is an advantage of embodiments of the present invention that detection of damage can be performed prior to the underlying structure being damaged, since the damage is measured on a cover layer.

The method may be adapted for measuring erosion in situ.

The sensing can be performed in any suitable manner, for example using optical detection, such as for example based on optical fibers) or using electrical detection, such as for example capacitive detection.

The present invention also relates to a system for monitoring erosion or growth on an underlying structure, the system comprising a cover layer for covering the underlying structure and a sensing system for sensing, e.g. optically or electrically, erosion of the cover layer or growth on the cover layer.

These and other aspects of the invention will be apparent from and elucidated with reference to the embodiment(s) described hereinafter.

**Brief description of the drawings**

FIG 1 illustrates the vertical cross section of a system according to embodiments of the present invention.
FIG 2 illustrates the horizontal cross section of the system of FIG 1.
FIG 3 illustrates different sensitive layers that can be used in some embodiments of the present invention.
FIG 4 illustrates the vertical cross section of a system and the electromagnetic flux lines while in operation.
FIG 5 illustrates the vertical cross section of the system illustrated in FIG 4 after thickness reduction of the protective layer due to damage from erosion or abrasion
FIG 6 illustrates a sensor according to embodiments of the present invention installed on the blade of a wind turbine.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention relates, in an aspect, to layered devices. Where in embodiments of the present invention reference is made to "layer", reference is made to different portions or regions of material defined through the thickness of the material, according to their purpose. Thus, in embodiments of the present invention, the layers are defined by their purpose rather than by their composition or thickness along the layered device. For example, a single sheet of material may have a first function, and it may include a local distribution of a different material, provided on one surface of the sheet, and with a different second function. The other surface of the sheet and the sheet matrix, with the first function, define a first functional layer, while the surface including the local distribution of material, and with a second function, may define a second functional layer. It further is to be noted that with a layer, also reference may be made to a set of non-continuous or independent or unconnected objects, such as for example ring-shaped objects but alternatively also other shaped objects. In other words, film or layer does not need to refer necessarily to a continuous object.

In the field of infrastructure and mechanical safety, an important part concerns the loss of structural integrity due to the exposure of the structure with elements or environment. The surrounding environment interacts with the structure during its use and it may change its properties, or even erode and remove material, from the structure. The present invention deals with monitoring of the loss of structural integrity via mechanisms that affect the atomic structure. These mechanisms include (but are not limited to) corrosion, abrasion, erosion or the like. It is nevertheless to be noticed that the present invention is more widely applicable than for sensing structural damage or changes.

The present invention provides a system and sensor which enables sensing or monitoring in situ a structure, for example even while the structure is being operational, in a sufficiently accurate way. Such monitoring or sensing may in general be for obtaining information regarding a structure or may be more specifically used for reducing or even preventing structural damage. The method may also be a method for protecting such structures.

The present invention provides a first layer of material over an underlying structure. The first layer is referred to as a cover layer. In some embodiments, the layer may be used as a protective layer arranging it to allow detection of potential damage from the environment, although embodiments are not limited thereto. The materials forming the cover layer in some embodiments provide actual shielding against damage to the underlying structure, by increasing the overall resistance of the whole structure against one or more damage mechanisms (for example against abrasion and/or erosion).

Detection, e.g. of changes of the structure, can be done by observation and monitorization, wherein the monitorization can be continuous or at particular moments in time, ideally even during the use of the structure, with no need to dismantle the structure from its device. The present invention enables this monitorization by arranging the cover layer so that a signal can be introduced within, so the material of the cover layer serves as transmission medium for the signal. Changes in the cover layer will result in changes of the signal transmitted through the cover layer. The signal can be introduced and sensed by the inclusion of electrodes in the arrangement, configured so they can introduce a signal in the cover layer. The signal can be detected and measured, and any changes in the cover layer will affect the signal therein. This way, changes in the cover layer can be detected and measured thanks to the signal.

In a first aspect, the present invention relates to a sensing system for sensing material properties. In some embodiments, it combines the protection of a shielding or protective layer, with monitorization of the levels of damage received by the shielding or protective layer, so that information on damaging of an underlying structure can be obtained. This improves the level of reliability of the protection. In particular embodiments, the system protects and allows detecting surface changes on engineering structures and components. The system includes a cover layer and at least two electrodes, which may be included in the cover layer, or may be included in a sensitive layer or even in the underlying structure. The electrodes have no conductive contact between them but they can introduce a signal (an electric field, a magnetic field, or in general an electromagnetic signal) in the protective layer. An underlying structure to be evaluated, e.g. protected, may include one or more of these systems.

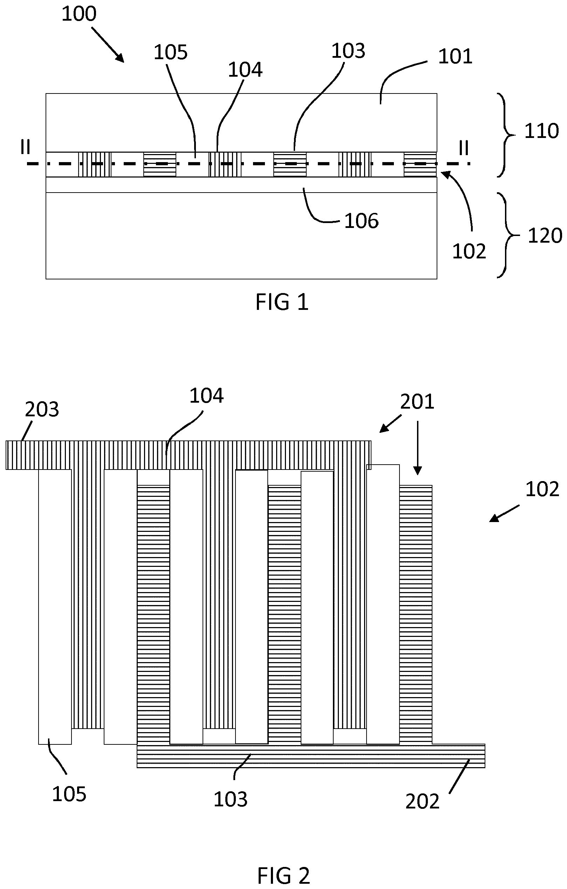

FIG 1 shows a (vertical) cross-section of an exemplary embodiment of the system 100, including a multi-layer structure 110 which includes a cover layer 101 and a plurality of electrodes 103, 104 which may be provided, for example, on the surface of the cover layer 101 facing an underlying structure 120. An optional sensitive layer 102 can be defined, including the electrodes, between the cover layer in contact with the environment and the underlying structure.

The cover layer 101 may include materials resistant to wear and environmental conditions, for example the cover layer 101 may be a functional multi-layer structure with anti-abrasive, anti-fouling... properties. The cover layer also may be referred to as protective layer. It may have the structure of a resin, a metal, a ceramic film or may be a combination of a resin, metal or ceramic film. It thus also may be a multi-layer stack. Additionally an adhesive may be present such as for example a pressure sensitive adhesive. The resin film may for example be a polyester, polyether, polyolefine (PP, PE, PE/PP), PVC, EVA, PVA, TAC, PI, PEEK, PMMA, PTFE, ETFE, polyacrylate, polyurethane, although embodiments are not limited thereto. A metal film may for example be made of Cu, Al, Ag, SUS, ZnO, ITO or a combination thereof. A ceramic material may for example be made of Si, SiN, Al2O3, TiN, BN. In a further option, the materials may be reinforced using for example particles, fibers, etc. to enforce erosion resistance. The thickness of the protective film may be between 10$\mu$m and 10mm, for example between 50$\grave{u}$m and 1mm, more preferably between 50$\mu$m and 500$\mu$m. The choice of material will depend mainly on the application of the structure. It may have anti-corrosion materials, for example, if the structure is envisaged as a part of a device in contact with corrosive materials, such as valves or pumps in a chemical plant, or an engine or the like. The choice may affect also the type and characteristics of the signal which will be transmitted through the material of the cover layer. For example, the impedance of the cover layer, or any other relevant parameter which affects signal transmission, can be considered.

The at least first and second electrodes 103, 104 are conductively insulated from each other. For example, the optional sensitive layer 102 may include optional spacers 105 between the electrodes, for spacing apart the electrodes 103, 104, ensuring that there is insulation between the first and the second electrode, and/or for improving the robustness of the layer. The spacers can in some exemplary embodiments be made of polymer materials such as polyurethane, polyesters, vynil, polyethylene, glasses such as silica glass and borate glass.

The horizontal cross section following the axis II of FIG 1 is shown as a top view of the sensitive layer 102 in FIG 2. The electrodes 103, 104 in the sensitive layer 102 may form lines of a conductor. Two electrodes are shown in the example, but more electrodes can be included. The electrodes 103, 104 of are arranged such that a signal coupling between two different electrodes may be provided, but with no actual conductive contact between these two different electrodes. The electrodes may include metallic leads, conductive ink-based leads, or conductive polymers, or any other suitable material that allows signal coupling. In some embodiments, the electrodes are provided directly on one of the surfaces of the protective layer 101, for example by printing the electrodes 103, 104 on the chosen surface using conductive ink. In other embodiments, the sensitive layer is provided independently from the cover layer, as a separate sheet of suitable material for the particular application, the sheet including leads, wires, or printed electrodes on its surface or embedded therein. The electrodes, or a sensitive layer including them, may be fixed to the underlying structure, and the cover layer may be interchangeable, for example.

The electrodes 103, 104 may be adapted to provide effective signal coupling. For example, an interdigitated arrangement 201 of electrodes is shown in FIG 2, corresponding to the horizontal cross section shown in FIG 1. Such arrangement 201 provides an effective signal coupling, with avoiding electric contact or conduction path, thus providing capacitive coupling between the electrodes 103, 104 when an AC signal is provided to the electrodes (for example by connecting the electrodes to an AC signal source). To this effect, in some embodiments the electrodes may include output terminals 202, 203 provided on the system, for external connection with a signal source or a readout stage or the like.

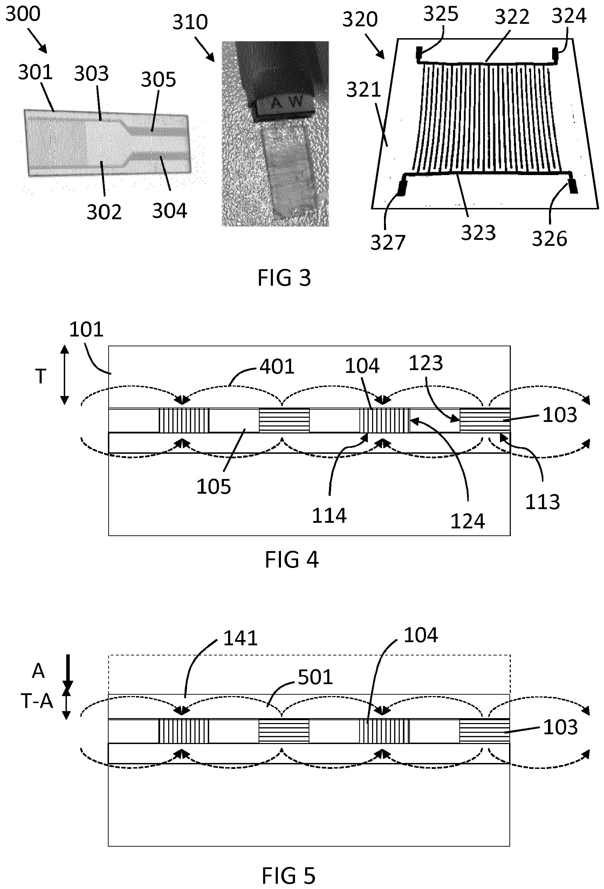

FIG 3 shows three examples of sheets including electrodes, which can be used as a sensitive layer. The rightmost image shows an embodiment of a separate sheet for use as a sensitive layer 300 comprising a rigid polymeric sheet 301 and two planar interdigitated electrodes 302, 303 embedded therein, each electrode including one terminal 304, 305. The active surface of the sheet may have dimensions of 8 x 6 mm. The center image 310 shows the rigid polymeric sheet connected to a wire for connection with an external readout unit, for example. The leftmost image shows a separate sheet for use as a sensitive layer 320 comprising a flexible sheet 321, e.g. a PCB sheet, embedding two planar interdigitated electrodes 322, 323, each electrode including two terminals 324, 325, 326, 327. The extra terminals 324, 326 of each electrode may be used to monitor resistance, for example.

The present invention is not limited to interdigitated electrodes for providing capacitive coupling, and other geometries can be provided. The system alternatively also may be adapted for inductive coupling or even resistive coupling.

While the electrodes are arranged so they provide effective signal coupling, the arrangement also allows that at least part of the signal coupling takes place within the cover layer 101. FIG 4 shows an example of this coupling effect when an AC signal is applied between the electrodes 103, 104. For example, the electrodes 103, 104 may be substantially flat, with the wide surfaces 113, 114 facing the protective layer and the narrow surfaces 123, 124 facing each other. This way, when an AC signal is applied, most of the electromagnetic flux 401 between a first electrode 103 and a different second electrode 104 exits and enters through their wide surfaces 113, 114, so the flux 401 is forced to pass through the cover layer 102. Additionally or alternatively, the spacers 105 may comprise or consist of material chosen so that the coupling has a preference to follow the path within the cover layer. For example, the electromagnetic permeability of the spacers 105 may be lower than that of the cover layer 101. Other geometries may be envisaged by the skilled person, also considering the geometry of the underlying structure and the nature of the signal and of the coupling.

Returning to FIG 1, the system can be included or installed on an underlying structure 120. The sensitive layer 102 (or at least the electrodes) can be sandwiched between the cover layer 101 and the underlying structure 120, which may or may not be part of the system. In the embodiment of FIG 1, the system includes a multi-layer structure 110 comprising two layers, a cover layer and a sensitive layer 102, and the multi-layer structure 110 is attached to the underlying structure 120, for example via an adhesive layer 106. This layer may in some examples be a glue (which is easy to apply and obtain), but other adhesives can be used. The adhesive layer may in some examples be a pressure sensitive adhesive. An adhesive layer is not the only way to attach the multi-layer structure to the surface, for example it may be soldered, riveted, welded, friction welded, co-extruded, etc. In the embodiment of FIG 1, the multi-layer structure 110 formed by the protective and the sensitive layer is removably installed on the surface of the underlying structure 120, so it can be interchanged by another multi-layer structure or part thereof multilayer structure 110 if needed by removing the previous adhesive layer, removing the previous multi-layer structure, applying a new adhesive layer on the surface of the underlying structure and applying a new multi-layer structure.

In other embodiments, the system formed by the cover layer 101 and electrodes, optionally embedded in an independent sensitive layer 102. The electrodes or the sensitive layer 102 may be independently applied on the underlying structure 120, for example by printing, adhering, electroless deposition, electrodeposition, etching, glueing, soldering, (friction) welding, co-extrusion or any other method for providing electrodes directly on the structure and the cover layer 101 may be applied directly on the underlying structure 120, by covering the electrodes of the underlying structure.

In summary, a multi-layer structure 110 including a cover layer covering electrodes (or a sensitive layer) can be applied to a structure; or a cover layer 101 can be applied to a structure including electrodes or including a sensitive layer with electrodes.

In other embodiments, the system of the present invention is integrated with the underlying structure. For example, electrodes may be embedded inside the underlying structure 120, for example close to its surface, and a protective layer 101 may be applied on top, for example integrated with the underlying structure 120, for example as a layer including a predetermined thickness extending from and away of the electrodes 103, 104. The principle is the same as in FIG 1, but no adhesive layer need to be present, and the spacers 105 may be included inside the underlying structure 120, or the material from the structure 120 itself may act as spacers.

The principle of action of the present invention is that, during use, the surface of the cover layer degrades over time, at variable or static rate. In some embodiments the degrading may be gradual, whereas in some embodiments degradation may be rather sudden, e.g. by impact of a hail, bird or lightning impact, e.g. on a turbine blade, or by going through ice or a muddy estuary for a ship. The degradation may be, for example, due to abrasion, so the material is removed from the top over time. This exemplary mechanism of degradation is shown in FIG 4 and FIG 5. A system according to embodiments of the present invention is provided on an underlying structure 120, for example a multi-layer structure110. An electrode network is embedded in or under this multilayer structure 110. The signal is transmitted as flux 401 through the thickness T of the cover layer 101, as shown in FIG 4. The impedance between the two conductively isolated electrodes 103, 104 is tracked continuously. If, as shown in FIG 5, the layer thickness T decreases (e.g. due to erosion or abrasion) an amount A, the impedance of the eroded layer 141 will change. The signal transmitted (as flux 401) through a cover layer 101 with a thickness T will be different from the signal transmitted (as flux 501) through the eroded protective layer 141 with a reduced thickness T - A, with A > 0. This measurable change in the signal is related to an amount of material that is lost. Thus, the change in a signal readout can be used to determine the parameter A. It is thus to be noted that when going from a situation as shown in FIG. 4 to the situation in FIG. 5, the flux lines are modified. In one example, the upper part of the flux lines in FIG. 4 go through a part of the volume that isn't present anymore in the situation shown in FIG. 5. As such the flux lines in 5 will be deformed, compared to the situation in FIG. 4.

Besides of tracking the impedance between two electrodes (e.g. AC impedance, from capacitive coupling), the system can be adapted to provide additional tracking of the resistance (e.g. the DC resistance) of at least one conductor embedded in the system. For example, one of the electrodes used for monitoring changes of the coupled signal can also be adapted, by for example including suitable electric sensing elements and/or connections in the electrode, to monitor the current through that electrode. A sudden and extensive change of resistance can give an indication that a significant damage took place. An example of significant damage could mean that a crack or the erosion fully penetrated the protective layer, and it reached (and possibly broke) the electrodes.

Additionally, in some embodiments, it is possible to use the electrodes to monitor the strain of the underlying structure 120, or of the surface thereof, to which the electrodes are contact. The resistance of a conductor also changes with its length, so by tracking the resistance of one or more of the electrodes 103, 104 forming a network (e.g. the interdigitated arrangement 201), it is possible to obtain an indication of the strain.

In some embodiments, these additional measurements can be properly offset and compensated. The system may implement proper temperature compensation, for example by including a series of temperature sensors in the system (e.g. in the protective layer, or on or in the underlying structure) so that changes of resistance due to temperature changes can be compensated. For example, a multi-layer structure including protective and sensitive layers can be included on a zone to be protected, and another, similar multi-layer structure to a zone of the underlying structure 120 that is also affected by the temperature, but not by abrasion. The difference of readings will give an idea of the influence of the temperature on the resistance readings.

In a further aspect, the present invention provides a sensor including any of the embodiments of the system of the previous aspect of the present invention, and it further includes a signal generator and a readout unit. The generator and readout unit are adapted to introduce an electrical signal on the leads or contact terminals 202, 203 of at least two electrodes 103, which cause signal coupling between these two electrodes through the cover layer 101; such electrical signal will by typically an AC electrical signal (pulsed, triangular, or any other suitable signal), the present invention not being limited thereto. In preferred embodiments, the signal generator and readout unit are integrated.

The readout unit is adapted to read the response of the electrodes to the signal coupling, and may include processing means (e.g. a processing unit, lookup table, etc.) for analyzing the read response. For example, the readout unit may read the change in the impedance (amplitude and/or phase) and analyze such change in order to obtain the amount of material loss of the transmitting medium (the protective layer).

The readout unit may include an output for communicating the degree of damage based on the analysis of the response. The output may be a display, printer, dashboard or the like, for communicating the result in terms of for example percentage of damage, or lost thickness, or the like. The communication may be wired or wireless. The readout unit alternatively or additionally includes an alert system in which an alert signal is communicated if the damage surpasses a set threshold, e.g. a predetermined thickness of the loss of material in the cover layer.

The sensor may be part of a network system. For example, a network system including a plurality of sensors, in a single structure or in multiple structures, can be controlled centrally. For example, a processing data center may control and monitor the damage (erosion, abrasion, etc.) on a structure or a hub of structures distributed across a field, or otherwise spread out, during operation of the structure or structures.

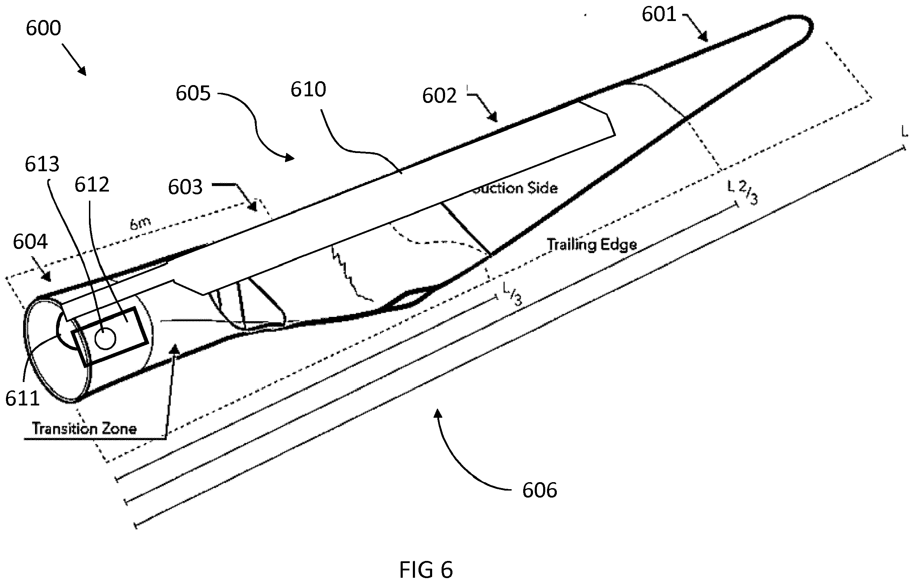

The following example shows a specific application targeted to monitor the erosion of wind leading edge of turbine blades, and provide on-line monitoring of erosion. FIG 6 shows a blade 600 of a wind turbine. Such blades can be divided in a tip section 601, a mid section 602 a max chord section 603, and a root section 604. The part that usually faces the wind is the leading edge 605 and the opposite edge is the trailing edge 606. The zone between the blade and the root is the transition zone. The leading edge 605 is usually the part that is affected the most by erosion and abrasion from, for example, dust particles or rain droplets in the air. A single instrumented film acting as a sensor 610, including a cover layer and electrodes (optionally included in a sensitive layer) may cover at least part of the leading edge 605 of the blade, or possibly a larger area, for example extending towards the trailing edge 606 over the suction side of the blade. Such instrumented film or sensor 610 may include a multi-layer structure 110 according to embodiments of the first aspect of the present invention.

A plurality or a network of conductors, which may be conductive tracks or wires or the like, are present beneath the protective layer of the sensor 610 and are not shown in the figure. These conductors act as the electrodes 103, 104 of embodiments of the first aspect of the invention. The conductors or leads are routed via connections 611 to the root of the blade where the blade is attached to the hub of the turbine, the rotating part at the front end of the nacelle. There they are plied over the edge, and connected to the electronics readout unit 612 located at the blade, for example inside the blade. In some embodiments the unit may be located inside the hub. As an alternative, a hole can be provided in the blade to route the leads, if the blade design allows this. The readout unit 612 may include a signal generation unit as signal source 613, or it may be external to it.

At predetermined or programmed moments in time, the electronics readout unit 612 generates an AC current (or potential) signal between two leads (related to two parts of the network / mesh, for example two electrodes). In parallel (e.g. simultaneously), the AC potential (or current) response is recorded. The AC signal may include low amplitude (e.g. low RMS amplitude, for example of the order of mA or mV) and a frequency between 0,001 Hz or 10 kHz. The signal can be a single sine, or a combination of multiple sines, or a sweep. The transfer function is then calculated (amplitude and phase). Alternatively or additionally, the amplitude of the response signal can be determined. This process can be performed on a single frequency, or over multiple frequencies (a spectrum).

The measurement can be continuous, or can be repeated for consecutive periods in time, for example multiple times a day, once every day for consecutive days, etc. Other embodiments of the present invention may include measurements according to a variable or programmable period, and/or programmable measurements according to for example environmental conditions, etc.

In some embodiments, the analysis includes tracking the evolution of the amplitude or phase as a function of time. The voltage and current expressions for an AC signal can be written as a function of time, and they have a periodic character with frequency and phase:

$$V = |V|e^{j(\omega t + \phi(V))},$$

$$I = |I|e^{j(\omega t + \phi(I))}$$

The impedance for a capacitor is frequency dependent:

$$Z = \frac{V}{I} = \frac{1}{2\pi f C}$$

Changes of impedance Z can be detected as a frequency shift of the signal readout. These changes stem from changes in the material base of the protective layer through which the signal is transmitted, such as reduction of thickness of the layer due to erosion or abrasion as shown in FIG 4 and FIG 5.

Alternatively, a model can be fitted to the transfer function. In that case one or more parameters in this model is or are tracked as a function of time. The starting value of the parameter or parameters (impedance amplitude, phase, or other) is determined before the system (e.g. multi-layer structure) or sensor is operational. For each blade type / multi-layer structure type the value of a 'fully eroded film' is determined in beforehand (for example, theoretically, experimentally without the protective layer, in-situ or in the factory, during manufacture, etc.). This will be considered the baseline. The numerical value will evolve from the 'initial' starting value towards the 'fully eroded' baseline value. Both extremes will thus be used to determine the percentage of material loss of the film over time, based on periodic, programmed, and/or continuous measurements.

The data can be collected in the readout unit and it can be sent through to a central server unit, via wires or wirelessly. Processing and analysis can be performed in the readout unit (e.g. including a processing unit) or in an external processing data center, e.g. comprised in the central server unit. Additionally, data readout or display can be provided. From this central server unit, a user or operator can check the degree of degradation on all instrumented blades in a plurality of instrumented wind turbines, even while these turbines are active.

The form factor of the system or sensor can be adapted to the application intended, and/or the underlying structure. For example, the shape shown in FIG 6 can be changed, as well as the distribution of the network of conductors (e.g. the arrangement of electrodes). For example, on a wind turbine blade it would be advantageous to apply a number of separate 'patches' of network, extending next to each other along the area of the underlying structure, in order to be able to localize the damage on the surface. For example, a multi-layer structure may include a multiple pairs of electrodes; alternatively a single protective layer may include a sensitive layer with multiple pairs of electrodes next to each other. Moreover, a plurality of sensors (multiple protective layers and corresponding electrodes) can be applied along the surface of a structure.

In a further aspect, the use of a system or sensor according to embodiments of any of the previous aspects of the present invention, for measuring or monitoring erosion of an underlying structure, is presented. The present invention comprises providing a sensitive layer between a protective layer and an underlying structure.

In some embodiments, at least two electrodes insulated from each other are included in an underlying structure, for example by embedding the electrodes inside the structure close to its surface, or by providing the electrodes on the surface of the structure, optionally also including spacers. Then, the underlying structure including the electrodes is covered by a protective layer (e.g. by covering it with a multi-layer structure), optionally adhering the protective layer to the underlying structure.

In alternative embodiments, the electrodes are provided on a surface of a protective multi-layer structure, for example by attaching conductive tracks, or printing with conductive ink, on a surface of the multi-layer structure. The surface including the electrodes may also include spacers or filling material. Thus, a sensitive layer can be formed. Then, an underlying structure is covered by the protective multi-layer structure. The multi-layer structure is arranged so that the electrodes are facing the underlying layer, thus arranging the sensitive layer between the underlying structure and the rest of the multi-layer structure. The multi-layer structure may be adhered by an adhesive layer such as glue or a pressure sensitive adhesive.

In alternative embodiments, a first protective sheet of material is provided, and a second sheet of material including electrodes is provided, and attached between the protective sheet and an underlying structure. Thus, a protective layer and a sensitive layer are obtained on top of a structure.

In all these cases, the parameters of transmission of the signal provided by the electrodes through the cover layer are known, or can be obtained, for example by calibration, e.g. during manufacture.

In some embodiments, the sensing structures may be provided in the form of sheet material, provided in the form of a roll or provided as a sleeve. These embodiments typically require the sensing structure in one or more layers, an adhesive layer for applying the sensing structure layers onto an underlying structure and release layer to protect the tacky surface of the adhesive layer when the layer structure is on the roll and to remove easily before applying the layer structure onto an underlying structure. The latter also results in the possibility to efficiently apply the layer structure.

By way of illustration, in one example the electrode configuration may be such that there is a one negative electrode being interdigitated and there may be a plurality of positive electrodes positioned at different zones on the surface. A voltage can be centrally applied and the different resulting currents can be measured per partial circuit or region. Alternatively, the voltage drop can also be measured.

In yet another example one electrode may be a full sheet electrode and another electrode may be a digitated electrode, whereby a layer is introduced in between both electrodes. Signals in between the electrodes can then be measured. In some embodiments, the interdigitated electrode could be permanently present in the underlying structural component to be monitored, whereas the full sheet electrode could be in the cover film, or vice versa.

In some embodiments, a use of a sensor is provided, by including a signal generator and readout means in the system obtained by any of the previous embodiments of the first aspect. The signal generator and readout means are connected to the electrodes. Optionally, the signal generator and readout means are integrated in a readout unit. Further analyzing means (processing unit, etc.) may be included in the sensor (e.g. in the readout means), for analyzing the measurements. Optionally, a display is included, for displaying the analyzed data.

The present invention can be used to control and monitor damages of structure. Potential applications include, but are not limited to:

- Leading edge erosion of wind turbine blades
- Erosion in oil pipelines, risers
- Erosion in dredging pipes
- Icing on wind turbine blades
- Fouling on a ship hull
- Fouling on a wave or tidal energy device
- Fouling on offshore wind turbine foundations
- Erosion in ship bulkheads, holds, tanks...

It is to be noted that in some applications, the sensor is adapted for detecting addition of material, rather than removal of material. For example in order to sense icing of a wind turbine blade. For example when icing on wind turbine blades or other objects is studied, the formation of ice will also result in a change in path for electrical conductivity and as such it can influence the sensor readout. In the case of icing, a layer of ice is formed on the blade, making it heavier and modifying its aerodynamic properties. If ice forms on the blades this also represents a safety risk for the turbine as the ice can detach from the blade and be propelled away, potentially hitting other structures or people in the vicinity.

The present invention allows a continuous, periodic or programmable monitoring of damages on a structure due to wear, abrasion, erosion or the like, with no need to dismantle the structure from its device or even interrupt its operation, thereby avoiding downtime of the device.

Further by way of illustration, embodiments of the present invention not being limited thereto, a number of examples is listed below of particular embodiments wherein the sensing structure can be provided.

In a first example, the sensing structure is provided as a multilayer structure comprising a cover (protective) layer, a sensitive layer and an adhesive layer. Additionally a release layer also may be provided.

In a second example, the sensing structure may be a system which comprises the electrodes embedded within the cover (protective) layer. A preferred embodiment of this structure is then a layer comprising the cover layer with the electrodes provided with an adhesive layer (for affixing the sensing system to the structure).

In a third example, the sensing structure is provided as a cover (protective) layer, with on one side thereof, printed electrodes, and further comprising in most embodiments an adhesive layer which serves to cover/embed the electrodes while providing a means to fix the sensing system to the structure.

In a fourth example, the sensing structure is provided in a system which comprises a cover (protective) layer, as well as the electrodes which, however, are provided on the structure to be protected or embedded to a certain extent within this structure. Again in such an embodiment, it appears that the cover (protective) layer will be provided with an adhesive and optionally with a release layer.

**Claims**

1. A sensing system (100), the sensing system including:

     - a cover layer (101) for covering an underlying structure (120, 600),
     - at least a first electrode (103, 302, 322) and at least a second electrode (104, 303, 323),
     - the at least first and second electrodes (103, 104, 302, 303, 322, 323) being connectable to a signal source (613), for providing a signal coupling between the at least first and second electrodes (103, 104, 302, 303, 322, 323), the at least first and second electrodes (103, 104, 302, 303, 322, 323) being isolated from each other,

   wherein at least first and second electrodes (103, 104, 302, 303, 322, 323) and the cover layer (101) are configured so that the signal is at least partially transmitted through the cover layer (101), wherein the cover layer (101) has an impedance, so that a change of the signal coupling between the at least first and at least second electrodes (103, 104, 302, 303, 322, 323) can be detected upon changes of impedance of the cover layer (101).

2. The sensing system of the previous claim wherein the electrodes are configured so that the signal coupling comprises at least one or more of capacitive coupling, inductive coupling or resistive coupling.

3. The sensing system of claims 1 or 2 wherein the electrodes (103, 104, 302, 303, 322, 323) are interdigitated electrodes.

4. The sensing system of any of the previous claims wherein the cover layer (101) embeds the electrodes in a single sheet of material.

**5.** The sensing system of any of claims 1 to 3 wherein the cover layer (101) covers a sensitive layer (102, 300, 320) embedding the electrodes.

**6.** The sensing system of any of claims 1 to 3 and 5 wherein the cover layer (101) is releasably attachable to a sensitive layer (102, 300, 320) embedding the electrodes.

**7.** The sensing system of any of the previous claims wherein the electrodes (103, 104) comprise conductive ink.

**8.** The sensing system of any of the previous claims wherein at least part of the sensing system (100) is included in a multilayer structure (110) attachable to an underlying structure (120) via an adhesive layer (106).

**9.** The sensing system of claim 8, wherein the adhesive layer (106) is adapted for connecting the cover layer (101) to the electrodes.

**10.** The sensing system of any of claims 1 to 8, wherein the electrodes are configurable for being interlayered between at least a portion of the cover layer (101) and an underlying structure (120, 600).

**11.** The sensing system of any of claims 1 to 3 wherein at least part of the sensing system is integrated in an underlying structure (120).

**12.** A sensor (610) including a sensing system of any of the previous claims, further including a signal source and readout unit (612) for analyzing the signal and/or comprising an output for providing a signal alert, or data corresponding to the results of the analysis.

**13.** The sensor of claim 12 wherein the signal source and readout unit (612) are adapted for analyzing changes of conductivity of at least one of the plurality of electrodes, so that a change of the current through the electrodes can be detected upon total penetration of damage through the protective layer.

**14.** Use of a sensor of claim 12 to 13 for sensing damage of any of wind turbine blades, pipelines, risers, ship hulls, wave or tidal energy harvesters, or ship bulkheads, holds or tanks or for sensing icing or fouling.

**15.** A method for monitoring an underlying structure, the method comprising

    - detecting a level of erosion based on a thickness of a cover layer applied to an underlying structure,
    - transmitting the sensed data to a processor for interpreting the sensor signal

    - deriving a diagnosis and/or prognosis of the impact of the level of erosion,
    - in view of said diagnosis and/or prognosis, replacing the cover layer before damage has occurred to the underlying structure.

FIG 1

FIG 2

300

301    303    305

302    304

310

320    325    322    324

321

327    323    326

FIG 3

101

T

401    104    123

103

105

114    124    113

FIG 4

141    104

A

T-A

501

103

FIG 5

FIG 6

Europäisches
Patentamt

European
Patent Office

Office européen
des brevets

# EUROPEAN SEARCH REPORT

Application Number

EP 18 20 5800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2015 204710 A1 (SIEMENS AG [DE]) 22 September 2016 (2016-09-22) * paragraphs [0004], [0005], [0007], [0008], [0011], [0012], [0018], [0019], [0032] - [0038]; figure 1 * | 1-15 | INV. G01N27/02 F03D80/40 |
| X | US 2015/042316 A1 (INKPEN STUART [CA] ET AL) 12 February 2015 (2015-02-12) * paragraphs [0022], [0023], [0025], [0027], [0030], [0032]; figure 2 * | 1-13 | |
| A | US 8 540 936 B2 (HEFNER REBECCA EVELYN [US]; DIMASCIO PAUL STEPHEN [US] ET AL.) 24 September 2013 (2013-09-24) * column 6, lines 6-33; figure 6 * | 1-15 | |
| A | US 5 310 470 A (AGARWALA VINOD S [US] ET AL) 10 May 1994 (1994-05-10) * column 2, line 44 - column 4, line 48; figure 1 * | 1-15 | |
| A | US 5 286 357 A (SMART JOHN D [GB] ET AL) 15 February 1994 (1994-02-15) * column 4, lines 5-14 * * column 5, lines 7-11 * | 1-15 | TECHNICAL FIELDS SEARCHED (IPC) G01N F03D |
| X | JI-HONG KIM ET AL: "Capacitive humidity sensors based on a newly designed interdigitated electrode structure", MICROSYSTEM TECHNOLOGIES, vol. 18, no. 1, 9 December 2011 (2011-12-09), pages 31-35, XP055584781, DE ISSN: 0946-7076, DOI: 10.1007/s00542-011-1373-0 * abstract; figures 1,3 * | 1-3 | |

The present search report has been drawn up for all claims

| Place of search | Date of completion of the search | Examiner |
|---|---|---|
| Munich | 3 May 2019 | Stussi, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 5800

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2019

| Patent document cited in search report | Publication date | Patent family member(s) | | Publication date |
|---|---|---|---|---|
| DE 102015204710 A1 | 22-09-2016 | DE 102015204710 A1 | | 22-09-2016 |
| | | WO 2016146337 A1 | | 22-09-2016 |
| US 2015042316 A1 | 12-02-2015 | BR 112014016636 A2 | | 13-06-2017 |
| | | CA 2860606 A1 | | 11-07-2013 |
| | | CN 104039651 A | | 10-09-2014 |
| | | EP 2800691 A1 | | 12-11-2014 |
| | | HK 1201237 A1 | | 28-08-2015 |
| | | US 2015042316 A1 | | 12-02-2015 |
| | | WO 2013102266 A1 | | 11-07-2013 |
| US 8540936 B2 | 24-09-2013 | NONE | | |
| US 5310470 A | 10-05-1994 | US 5310470 A | | 10-05-1994 |
| | | US 5338432 A | | 16-08-1994 |
| US 5286357 A | 15-02-1994 | CA 2075145 A1 | | 04-02-1993 |
| | | EP 0528554 A2 | | 24-02-1993 |
| | | GB 2258535 A | | 10-02-1993 |
| | | JP 2881669 B2 | | 12-04-1999 |
| | | JP H06186196 A | | 08-07-1994 |
| | | US 5286357 A | | 15-02-1994 |

EPO FORM P0459

For more details about this annex : see Official Journal of the European Patent Office, No. 12/82